# EUROPEAN PATENT APPLICATION

(11) **EP 1 231 245 A1**
(43) Date of publication of application: **14.08.2002**
(21) Application number: 02250505.1
(22) Date of filing: 25.01.2002
(51) Int. Cl.: C09D 11/00

(54) **Ink-jet treating solution**

(30) Priority: 12.02.2001 US 781782
(71) Applicant: Hewlett-Packard Company, Palo Alto, CA 94304 (US)
(72) Inventor: Lee, Shirley, Poway, CA 92064 (US); Kelly-Rowley, Anne M., San Diego, CA 92129 (US); Sperry, Robert W., San Diego, CA 92129 (US)
(74) Representative: Jackson, Richard Eric

(57) **Abstract**

Ink-jet treating solution having a water base and an imidized styrene maleic anhydride polymer. The polymer is insoluble in a neutral aqueous medium and it is present in a concentration by weight of between about 2% and 4%, with a preferred concentration of about 3%. The polymer imparts wet smudge resistance to ink-jet inks when printed.

## Description

### BACKGROUND OF THE INVENTION

The present invention relates generally to ink-jet printer inks and, more particularly, to techniques for improving performance of such inks.

Stating the case more precisely, the present invention relates to ink-jet inks employed in ink-jet printing, especially in cases where the underprinting and/or overprinting of ink-jet inks are utilized to induce precipitation of the colorants contained therein, thereby improving optical density, wet smudge resistance and imparting gloss.

Concomitant with advances in ink-jet printer functions, needs have developed for faster system throughput together with suitable media for use in such systems and improved inks compatible with such systems and with printer media.

A goal for some time has been to find a technique to immobilize dyes quickly and reliably on the print media. In this regard, U.S. Pat. No. 4,554,181 discloses treating media, such as paper, with a water-soluble polyvalent metal salt and a cationic polymer, as a method for immobilizing anionic dyes. Specifically, the patent discloses that it is the cationic groups in the polymer that serve to precipitate anionic dyes in the ink.

While the technique of treating paper with metal salts has some utility in inducing precipitation of colorants, it adds to media costs since specially treated paper is required. Moreover, it is inconvenient that the choice of print media is limited to a particular specially treated paper. Accordingly, a need remains for a method whereby penetration of colorant can be substantially reduced or eliminated in ink-jet printing without resorting to the high cost and inconvenience associated with using specially-prepared paper.

### DISCLOSURE OF THE INVENTION

In a preferred embodiment, the invention provides an ink-jet treating solution having a water base and an imidized styrene maleic anhydride polymer. The polymer is insoluble in neutral to basic aqueous medium and it is present in a concentration by weight of between about 2% and 4%, with a preferred concentration of about 3%. A preferred treating fluid formulation, as set forth in more detail below, includes a water base, 2-pyrrolidine, glycerol, tetraethylene glycol, Tergitol 15-S5 or S-7, Tinolux styrene-maleic anhydride copolymer derivative, and Lupasol pH about 4.5.

Tergitol 15- S5 or S7 is a trademark of Union Carbide Corporation for polyethylene glycol ethers of a mixture of fatty alcohol, with an average of 5 or 7 moles of ethylene glycol. Tinolux is a trademark of Ciba Specialty Chemicals for an aqueous solution of sulfonated tetrabenzotetraaxaporphine.

The present invention affords several advantages. For example, it enables improved water fastness and wet smudge resistance. In addition, it is useful with ordinary paper media thereby offer value to the consumers without added the costs of special media. Other aspects and advantages of the present invention will become apparent from the following detailed description, illustrating by way of example the principles of the invention.

### BEST MODE FOR CARRYING OUT THE INVENTION

According to the best mode for practicing the present invention, the primary ink-jet ink and the treating solution are deposited on the print medium by an ink-jet printer in a stratified fashion. While it is preferred that the primary ink-jet ink is substantially overcoated, undercoated or interlaced by the treating solution, an area coverage of about 30 to 80% would be considered an optimal coverage in practice, given current printer precision and lateral diffusion of the ink components.

The primary ink-jet ink and the treating solution may be contained in separate ink-jet pen cartridges within the ink-jet printer. In one print mode, for example, the treating solution is deposited onto the print medium and the primary ink-jet ink is thereafter printed substantially on top. This process is referred to as underprinting. In another print mode, the primary ink-jet ink is deposited onto the print medium and the treating solution is thereafter printed on top. This process is referred to as overprinting. In another technique, the treating fluid can be interlaced with the colorants drops. Regardless of whether the primary ink-jet ink is underprinted, overprinted or interlaced by the treating solution, interaction between the colorant in the ink and the treating solution is achieved by precipitation of the colorant, preceding the occurrence of undesirable spreading and penetrating flow of the colorants into the pores of the medium.

It is apparent that the polymers used in the present invention have advantages over other types of polymers, in terms of the final properties. In this regard, the preferred polymers are in a class of fully imidized styrene-maleic anhydride copolymers. An example of this class of polymers, Styrene Maleimide Resin SMA X1000i, can be obtained from Elf AtomChem North America, Philadelphia, USA. Elf AtoChem's Styrene Maleimide resins are manufactured by reacting Styrene Maleic Anhydride resin with dimethylaminopropylamine to produce the structure shown below.

Under low pH conditions (pH less than 5), the imidized SMA polymer is soluble in water and is compatible with many of inkjet ink constituents. The polymer is soluble in acidic aqueous solution because the tertiary amine functional group is protonated. When this polymer solution is mixed with an ink colorant in a higher pH medium, the amine deprotonates, thus renders the polymer insoluble. This insolubility of the polymer in neutral basic aqueous medium gives rise to the water fastness of the colorant/polymer mixture on the printed media. In addition, the aromaticity of the styrene moiety in the polymer chain can also impart water repellency to the polymer/colorant mixture. As a result, improved water fastness and wet smudge resistance are accomplished when imidized SMA is used in the treating solution.

In order to test the effectiveness of the present invention, treating fluid formulations were prepared as follows:

**TABLE I**

| | Formulation with imidized polymer | control |
|---|---|---|
| | | |
| 2-Pyrrolidone | 5 | 5 |
| Glycerol | 5 | 5 |
| Tetraethylene glycol | 5 | 5 |
| Tergitol 15-S5 or S7 | 0.2 | 0.2 |
| Tinolux BBS | 0.05 | 0.05 |
| SMA X1000i | 3 | 0 |
| Lupasol FG | 3 | 3 |
| HNO₃ to adjust pH | pH=4.5 | pH=4.5 |
| Water | Balance of 100 | Balance of 100 |

The values shown in TABLE I are set forth as percentages by weight.

The following data show the wet smudge resistance, as measured by the optical density (OD) of the colorant inks being transferred out of a printed block, for the test formulation and the control. It will be noted that the control is identical to the experimental formulation except it does not contain the polymer. Twenty four hours after test blocks were printed, a small amount of water was applied to the printed area, and a smudge pen with a pre-set downward force was drawn across the printed blocks. The optical density of the transferred colorant was then measured

In this experiment, nine different printmodes (variations of over, under and interlace) were used and the following results of the average of various printmodes were obtained. These results are shown in TABLE II and they show improvement over the control formulation. That is, the test formula consistently shows improved performance, as compared to the control.

For convenience, the formulas for styrene maleimide copolymer, and its constituents, are shown below TABLE IV.

Referring now to TABLE II, printmode #1 through #3 are essentially overprint modes, printmode #4 through #7 are essentially underprint modes and printmode #8 and #9 are interlace modes. It is known that the higher the OD the higher the OD-transferred by smudge.

The one-hour wet smudge optical density (OD) transfer was plotted against the OD of the unsmudged block. A line was fitted through the points representing the data from the control test solution without the polymer. The results are shown in TABLE III. The efficacy of the test formulation is evident from the plot: all nine printmodes used in the experiment, the wet smudge transfers for the test formulations are equal to, or less than, the control formulation at the same original block OD, indicative of better smudge resistance of the test formulation.

**TABLE II**

| **printmode #** | **treating Fluid** | **OD transferred** | | **treating Fluid** | **OD transferred** | |
|---|---|---|---|---|---|---|
| 1 | Control | 1hr | 0.27 | Test formula | 1hr | 0.32 |
| | | 24hr | 0.23 | | 24hr | 0.23 |
| | | OD | 1.21 | | OD | 1.22 |
| 2 | Control | 1hr | 0.20 | Test formula | 1hr | 0.23 |
| | | 24hr | 0.16 | | 24hr | 0.16 |
| | | OD | 1.19 | | OD | 1.21 |
| 3 | Control | 1hr | 0.17 | Test formula | 1hr | 0.17 |
| | | 24hr | 0.12 | | 24hr | 0.13 |
| | | OD | 1.16 | | OD | 1.19 |
| 4 | Control | 1hr | 0.19 | Test formula | 1hr | 0.22 |
| | | 24hr | 0.15 | | 24hr | 0.16 |
| | | OD | 1.18 | | OD | 1.22 |
| 5 | Control | 1hr | 0.1 | Test formula | 1hr | 0.17 |
| | | 24hr | 0.12 | | 24hr | 0.12 |
| | | OD | 1.16 | | OD | 1.20 |
| 6 | Control | 1hr | 0.3 | Test formula | 1hr | 0.29 |
| | | 24hr | 0.25 | | 24hr | 0.20 |
| | | OD | 1.2 | | OD | 1.24 |
| 7 | Control | 1hr | 0.3 | Test formula | 1hr | 0.31 |
| | | 24hr | 0.30 | | 24hr | 0.25 |
| | | OD | 1.24 | | OD | 1.21 |
| 8 | Control | 1hr | 0.16 | Test formula | 1hr | 0.15 |
| | | 24hr | 0.13 | | 24hr | 0.10 |
| | | OD | 1.17 | | OD | 1.21 |
| 9 | Control | 1hr | 0.27 | Test formula | 1hr | 0.23 |
| | | 24hr | 0.25 | | 24hr | 0.19 |
| | | OD | 1.20 | | OD | 1.23 |

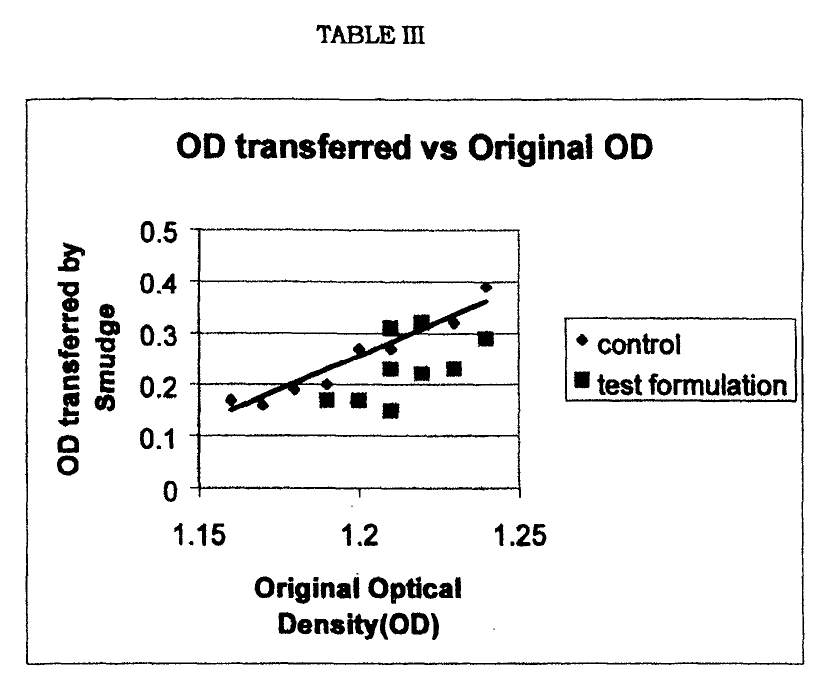

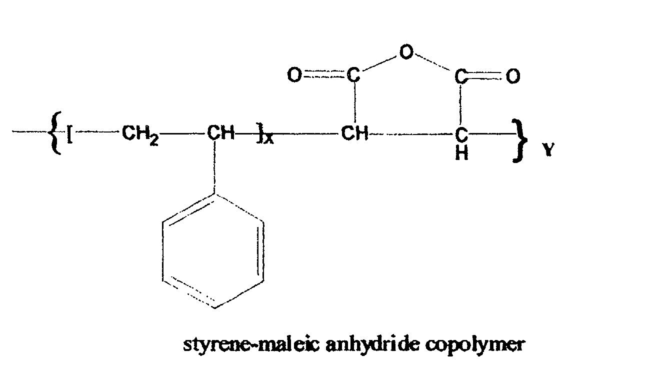

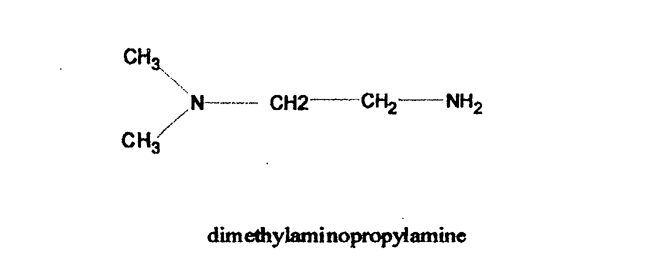

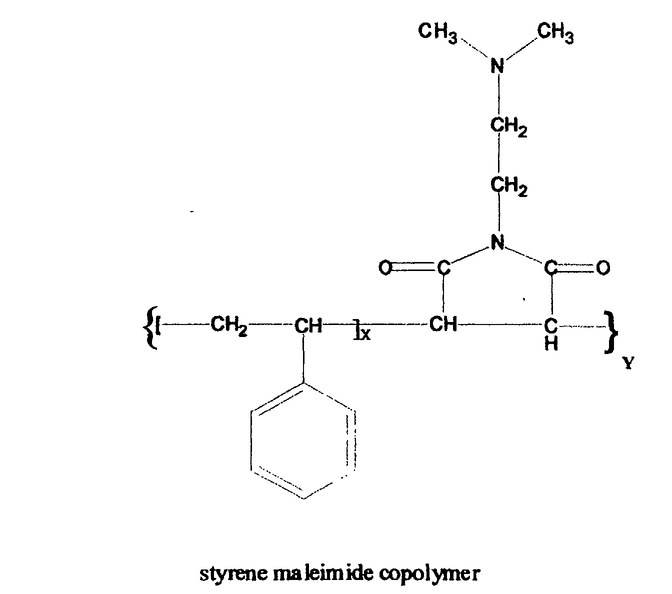

The scope of the present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. Ink-jet treating solution, comprising:
a water base; and
an imidized styrene maleic anhydride polymer.

2. The treating solution according to claim 1, wherein said polymer is insoluble in a neutral aqueous medium.

3. The treating solution according to claim 1, wherein said polymer comprises about 2% to about 4% by weight of said treating solution.

4. The treating solution according to claim 1, wherein said polymer comprises about 3% by weight of said treating solution.
